# EUROPEAN PATENT APPLICATION

(11) **EP 2 254 032 A1**
(43) Date of publication of application: **24.11.2010**
(21) Application number: 09160884.4
(22) Date of filing: 21.05.2009
(51) Int. Cl.: G06F 3/048

(54) **Portable electronic device and method of controlling same**

(71) Applicant: RESEARCH IN MOTION LIMITED, Waterloo, Ontario N2L 3W8 (CA)
(72) Inventor: Cundill, Andrew Philip, Ontario, K2K 2A5 (CA)
(74) Representative: Fennell, Gareth Charles

(57) **Abstract**

A method of controlling a portable electronic device (100) having a touch-sensitive display (118) includes rendering content on the touch-sensitive display, detecting a first touch at a first location (600) on the touch-sensitive display, detecting a second touch at a second location (602) on the touch-sensitive display during the first touch, determining an area having a boundary (604,606,608,610) defined by the first location and the second location, when a zoom selection is detected, performing a zooming operation by expanding rendered content in at least the area.

## Description

The present disclosure relates generally to a portable electronic device including a touch screen display and control of the electronic device.

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones, wireless PDAs, and laptop computers with wireless 802.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed. With continued demand for decreased size of portable electronic devices, touch-sensitive displays continue to decrease in size.

Improvements in electronic devices with touch-sensitive or touchscreen devices are desirable.

### GENERAL

A method of controlling a portable electronic device that has a touch-sensitive display may be provided. The method may comprise rendering information on the touch-sensitive display, detecting a first touch at a first location on the touch-sensitive display, detecting a second touch at a second location on the touch-sensitive screen display during the first touch, determining, based at least in part on the first location and the second location, an area having at least one boundary. When zoom selection is detected, performing a zoom by expanding at least some of the information rendered from the area.

A portable electronic device may also be provided. The portable electronic device may comprise a touch-sensitive display, a processor operably connected to the touch-sensitive display, and a memory device storing computer readable program code executable by the processor to cause the electronic device to render information on the touch-sensitive display, detect a first touch at a first location and a second touch at a second location on the touch-sensitive display, determine an area based on the first location and the second location , when a zoom selection is detected, zooming at least some of the information rendered from the area. The portable electronic device may comprise: a touch-sensitive display; a processor operably connected to the touch-sensitive display, a memory device storing computer-readable program code executable by the processor to cause the electronic device to perform a method described in this specification.

The control of the portable electronic device for zooming may facilitate user-interaction and selection of an area for zooming on a touch-sensitive display. The area may be an area on a picture, diagram, text or any other suitable rendered content. The area may be determined by the first and second touch locations. A user may change either or both of the touch locations to refine the area on which the zooming operation is performed. The zooming operation may be performed only when the confirmation is received, such as an input from a switch actuated upon depression of the touch-sensitive display. Therefore the user may define the area by the touch locations and while maintaining touch contact, depresses the touch-sensitive display to confirm the selection and perform the zoom operation. The confirmation of selection while maintaining touch contact may permit the user to redefine the area until the desired area is defined for zooming. Further, addition screens including menus may be unnecessary, saving time of device use, thereby decreasing power requirements and increasing battery life. Further still, additional devices such as a scroll wheel, trackball or buttons may not be required for selection on the touch-sensitive display.

### BRIEF DESCRIPTION OF THE DRAWINGS

Embodiments of the present disclosure are now described, by way of example only, with reference to the attached figures.

FIG. 1 is a block diagram of components including components of a portable electronic device in accordance with the present description.

FIG. 2 is a front view of an example of a portable electronic device in accordance with the present description.

FIG. 3 is a cross-sectional view through line 210 of the portable electronic device of FIG. 2 in accordance with the present description.

FIG. 4 is a flowchart illustrating a method of controlling a portable electronic device including a touch-sensitive display in accordance with the present description.

FIG. 5 through FIG. 9 show an examples of zooming rendered information via touch on a touch-sensitive display in accordance with the present description.

### DESCRIPTION OF PREFERRED EMBODIMENTS

For simplicity and clarity of illustration, reference numerals may be repeated among the figures to indicate corresponding or analogous elements. In addition, numerous specific details are set forth in order to provide a thorough understanding of the embodiments described herein. The embodiments described herein may be practiced without these specific details. In other instances, well-known methods, procedures and components have not been described in detail so as not to obscure the embodiments described herein. Also, the description is not to be considered as limited to the scope of the embodiments described herein.

The disclosure generally relates to an electronic device, which in the embodiments described herein is a portable electronic device. Examples of portable electronic devices include mobile, or handheld, wireless communication devices such as pagers, cellular phones, cellular smart-phones, wireless organizers, personal digital assistants, wirelessly enabled notebook computers, and the like. The portable electronic device may also be a portable electronic device without wireless communication capabilities such as a handheld electronic game device, digital photograph album, digital camera, or other device.

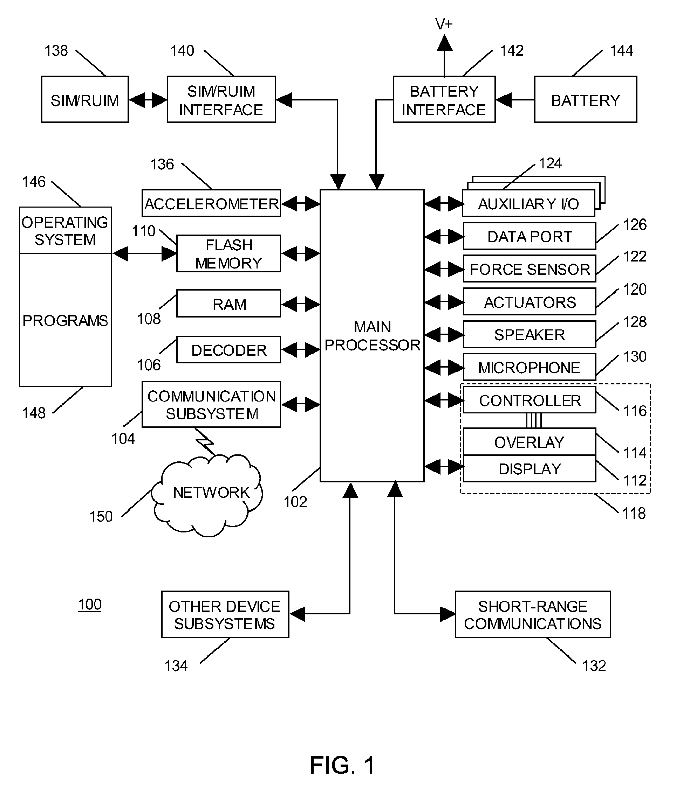

A block diagram of an example of an embodiment of a portable electronic device 100 is shown in FIG. 1. The portable electronic device 100 includes a number of components such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data-centric wireless networks, voice-centric wireless networks, and dual-mode networks that support both voice and data communications over the same physical base stations. The portable electronic device 100 is a battery-powered device and includes a battery interface 142 for receiving one or more rechargeable batteries 144.

The processor 102 also interacts with additional subsystems such as a Random Access Memory (RAM) 108, a flash memory 110, a display 112 with a touch-sensitive overlay 114 connected to an electronic controller 116 that together comprise a touch-sensitive display 118, an actuator 120, one or more force sensors 122, an auxiliary input/output (I/O) subsystem 124, a data port 126, a speaker 128, a microphone 130, short-range communications 132 and other device subsystems 134. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. The processor 102 may also interact with an accelerometer 136 as shown in FIG. 1. The accelerometer 136 may include a cantilever beam with a proof mass and suitable deflection sensing circuitry. The accelerometer 136 may be utilized for detecting direction of gravitational forces or gravity-induced reaction forces.

To identify a subscriber for network access according to the present embodiment, the portable electronic device 100 uses a Subscriber Identity Module or a Removable User Identity Module (SIM/RUIM) card 138 inserted into a SIM/RUIM interface 140 for communication with a network such as the wireless network 150. Alternatively, user identification information may be programmed into the flash memory 110.

The portable electronic device 100 also includes an operating system 146 and software components 148 that are executed by the processor 102 and are typically stored in a persistent store such as the flash memory 110. Additional applications may be loaded onto the portable electronic device 100 through the wireless network 150, the auxiliary I/O subsystem 124, the data port 126, the short-range communications subsystem 132, or any other suitable device subsystem 134.

In use, a received signal such as a text message, an e-mail message, or web page download is processed by the communication subsystem 104 and input to the processor 102. The processor 102 then processes the received signal for output to the display 112 or alternatively to the auxiliary I/O subsystem 124. A subscriber may also compose data items, such as e-mail messages, for example, which may be transmitted over the wireless network 150 through the communication subsystem 104. For voice communications, the overall operation of the portable electronic device 100 is substantially similar except that the received signals are output to the speaker 128 and signals for transmission are generated by the microphone 130.

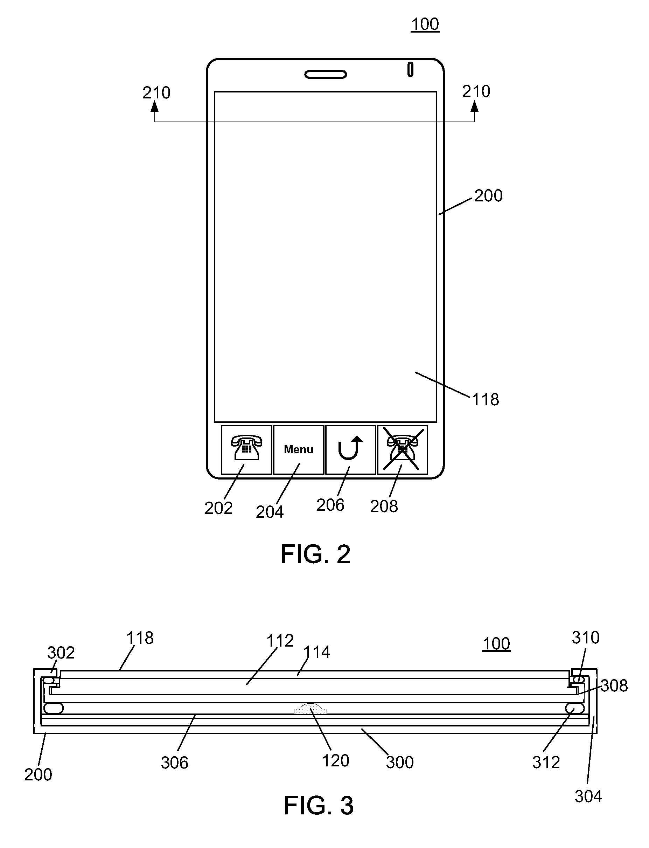

A front view of a portable electronic device 100 is shown in FIG. 2. The portable electronic device 100 is shown with a housing 200 that encloses internal components, including internal components shown in FIG. 1, and frames the touch-sensitive display 118 such that an outer surface of the touch-sensitive display 118 is exposed for user-interaction. The housing 200 may be comprised of one or more components. The portable electronic device 100 may also include physical switches or buttons, such as the four physical buttons 202, 204, 206, 208 in the example of FIG. 2 for performing functions or operations. A graphical user interface, as known in art, renders information on the touch-sensitive display 118, including, for example, any number of viewable or selectable features. Such features may include, for example, virtual buttons that represent, for example, applications, options, or keys of a keyboard for user entry of data during operation of the portable electronic device 100.

The touch-sensitive display 118 may be any suitable touch-sensitive display, such as a capacitive touch-sensitive display, as known in the art. A capacitive touch-sensitive display includes the display 112 and a capacitive touch-sensitive overlay 114 fixed to the display 112 via a suitable adhesive. The overlay 114 may be an assembly of multiple layers in a stack including, for example, a substrate fixed to the LCD display 112 by a suitable adhesive, a ground shield layer, a barrier layer, a pair of capacitive touch sensor layers separated by a substrate or other barrier layer, and a cover layer fixed to a second capacitive touch sensor layer by a suitable adhesive. The capacitive touch sensor layers may be any suitable material such as patterned indium tin oxide (ITO).

The location of a user's touch on the touch-sensitive display 118 includes X and Y components (e.g., horizontal and vertical with respect to one's view of the touch-sensitive display 118, respectively). For example, the X location may be determined by a signal generated as a result of capacitive coupling with one of the touch sensor layers, and the Y location may be determined by a signal generated as a result of capacitive coupling with another of the touch sensor layers. Each of the touch-sensor layers provides a signal to the controller 116 as a result of capacitive coupling with a suitable object, such as a user's finger. The signals include representations of the X and Y touch location values.

As shown in FIG. 3, the housing 200 in the present example includes a back 300, a frame 302, and sidewalls 304 that extend between the back 300 and the frame 302. A base 306 is spaced from and is generally parallel to the back 300. The base 306 may be any suitable base such as a printed circuit board or flex circuit board supported by a stiff support between the base 306 and the back 300. The back 300, the sidewalls 304, and the frame 302 may be injection molded and/or may be separate pieces or one or more integrated pieces.

The display 112 and the touch-sensitive overlay 114 are supported on a support tray 308 of suitable material, such as magnesium, for providing mechanical support to the display 112 and the touch-sensitive overlay 114. Biasing elements 312 between the base 306 and the support tray 308 bias the support tray away from the base 306. Suitable material for the biasing elements may include, for example, cellular urethane foam. The touch-sensitive display 118 is moveable within the housing 200. As the touch-sensitive display 118 is moved toward the base 306, the biasing elements 312 are compressed, thereby applying a force to the actuator 120, which is shown in the example as a mechanical dome switch actuator 120. FIG. 3 shows the touch-sensitive display 118 when no external force is applied and with the actuator 120 in a rest, or unactuated, position.

The actuator 120 is located such that depression of the touch-sensitive display 118 with sufficient force overcomes the bias and overcomes the actuation force for the actuator 120, thereby depressing the actuator. Actuation of the actuator 120 provides the user with tactile feedback. For a mechanical dome switch actuator, tactile feedback is provided when the dome collapses due to imparted force and when the dome switch actuator returns to the rest position after release of the switch. The actuator 120 may be actuated by pressing anywhere on the touch-sensitive display 118 to cause movement of the touch-sensitive display 118 parallel with the base 306 or pivoting toward the base 306. The actuator 120 may be used for further input to the processor 102 when actuated. Although a single actuator is shown, any suitable number of actuators may be utilized and may be located in any suitable position.

A flowchart illustrating a method of controlling a portable electronic device in accordance with one embodiment. The steps of the method may be carried out by software executed by, for example, the processor 102. Coding of software for carrying out such steps is within the scope of a person of ordinary skill in the art given the present description.

Information is rendered 400 on the touch-sensitive display 118. A first touch on the touch-sensitive display 118 is detected 402 and a location of the touch is determined. A touch may include a single touch, a beginning or end of a swipe or gesture, or other known touches on a touch-sensitive or touchscreen display. A second touch on the touch-sensitive display 118 is detected 404 and the location of the touch is determined. Area boundaries are determined 406 based on, for example, the X and Y location of the first touch and the X and Y location of the second touch. Area boundaries may be rectangular, circular, or any other shape. The touch locations may comprise opposing corners of a rectangle, diametric ends of a circle or ellipse, a center and radius of a circle, and so forth. Optionally, a visual indicator may be rendered to show the area selected for the zoom, thereby facilitating more accurate zoom selection.
A determination is made 408 whether or not there is a change in the first touch location.
If either touch location changes 408 prior to receiving confirmation of selection 412, the area boundaries are again determined 406 based on the current locations of the first touch and the second touch.

A determination is made 412 whether or not zoom selection is detected. The zoom selection may be detected while two touches are simultaneously maintained or within a predetermined period of time after the two touches are detected. Zoom selection may be detected, for example, by detecting actuation of the actuator or switch 120. For example, the actuator 120 may be actuated by application of sufficient force to the touch-sensitive display 118 to cause movement of the display 118 toward the base 306, opposing the biasing force of the biasing elements 312. Alternatively, zoom selection may occur when detection of a predetermined amount of force imparted on the touch-sensitive display 118, which detection may be provided by one or more force sensors 122.

Optionally, the actuator 120 may comprise one or more piezoelectric actuators between the base 306 and the support tray 308 for providing tactile feedback to the user. Each piezo actuator includes a piezoelectric device such as a piezoelectric (PZT) ceramic disk adhered to a metal substrate such that the metal substrate bends when the PZT disk contracts as a result of build up of charge at the PZT disk. The charge may be adjusted by varying the applied voltage or current. When the charge reaches a predetermined amount, the charge may advantageously be removed over a relatively short period of time to provide tactile feedback to the user. The charge on the piezo actuator may be removed by a controlled discharge current that causes the PZT disk to expand, thereby releasing the force caused by the electric charge and decreasing the force on the touch-sensitive display 118 applied by the piezo actuators.

When zoom selection is detected, a zooming operation is performed 414 in which the information rendered in the area that has a boundary defined by the first touch location and the second touch location is expanded. A zooming operation may be performed 414 by maintaining the aspect ratio, i.e., the ratio of width to height, of the information rendered from the area. In this situation, the information is expanded by one factor, i.e., the same factor, in the horizontal and the vertical direction. The information is advantageously centered before zooming. Additional information from outside the area may be added to the zoomed information. The information may alternatively be cropped near two opposing sides. Further, the information may be stretched to fill the available area for display of information.

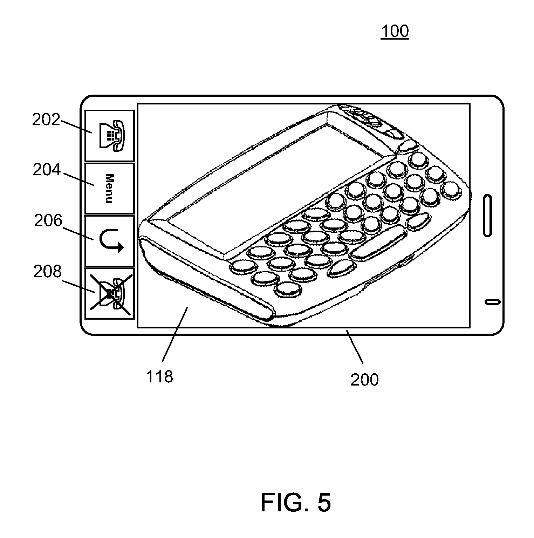

Examples of the method of zooming rendered information via touch on a touch-sensitive display 118 are shown in FIG. 5 through FIG. 9. An example of information rendered on the touch-sensitive display 118 is shown in FIG. 5, which depicts an image of a portable electronic device having a physical keyboard rendered, for example, by an image viewing application.

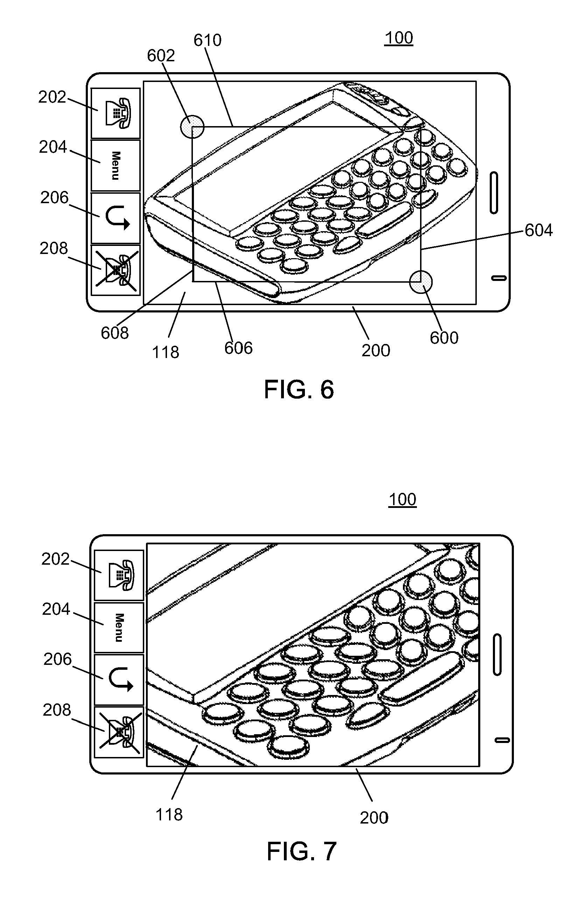

A first touch 600 on the touch-sensitive display 118 is detected 402, and the X and Y location of the first touch is determined, as shown in FIG. 6. A second touch 602 on the touch-sensitive display 18 is detected 404, and the X and Y location of the second touch is determined.

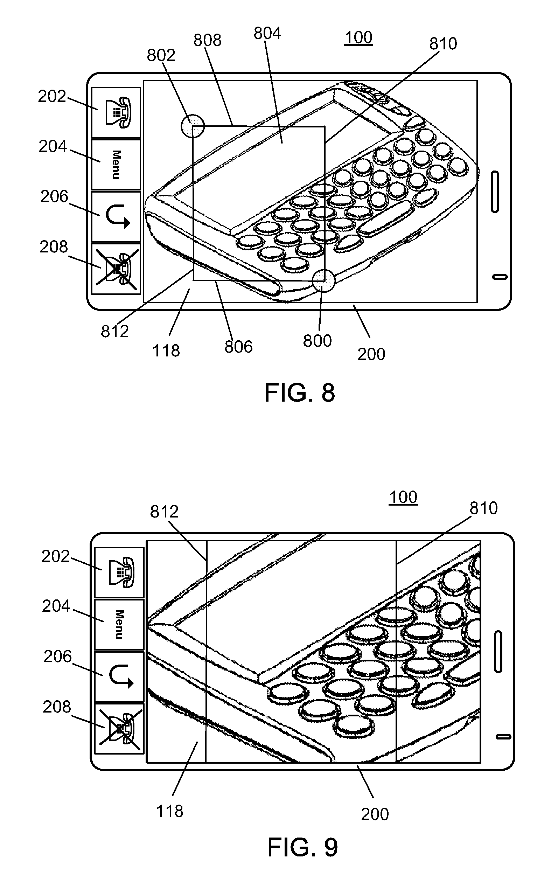

Area boundaries are determined 406 based on the X and Y location 600 of the first touch and the X and Y location 602 of the second touch. In the example shown in FIG. 6, the area boundaries 604, 606, 608, 610 are extrapolated from the two locations to form a rectangle, where the location of the first touch and the location of the second touch are diagonally opposing corners of the rectangle, with sides of the rectangle shown parallel with the sides of the available display area of the touch-sensitive display 118. When zoom selection is detected, the information rendered is expanded until one pair of opposing boundaries 604, 608 or 606, 610 of the rectangle is the same distance as its corresponding boundaries of the available display area of the touch screen display 118, resulting in the zoomed image as shown in FIG. 7 for this example. In this example, the information rendered is expanded by the same factor in each direction, with the area 604, 606, 608, 610 centered on the touch screen display 118. The user may pan around the rendered information, i.e., the image, after zooming to view a different area. The touches at the first touch location and the second touch location may set forth an area with a different aspect ratio than that of the touch-sensitive display 118, such as shown in FIG. 8. The first and second touches 800, 802 shown in FIG. 8 are extrapolated to a rectangular area 804. The area 804 is centered on the touch-sensitive display 118 and the information rendered is resized by expanding the image in the area 804 until the available area on the touch-sensitive display 118 is filled, as shown in FIG. 9. The available area may be filled by adding information from outside the area, e.g. near the vertical boundaries 810, 812, to fill the available display area, as shown in FIG. 9, or by stretching information from the area 804 (not shown). Alternatively, the area may be expanded as long as the aspect ratio is maintained, and the remainder of the touch-sensitive display may be left blank, e.g., dark or black. As shown in FIG. 9, the information rendered is not expanded further after the two opposing boundaries 806, 808 is the same size as the vertical boundary of the available display area of the touch-sensitive display 118.

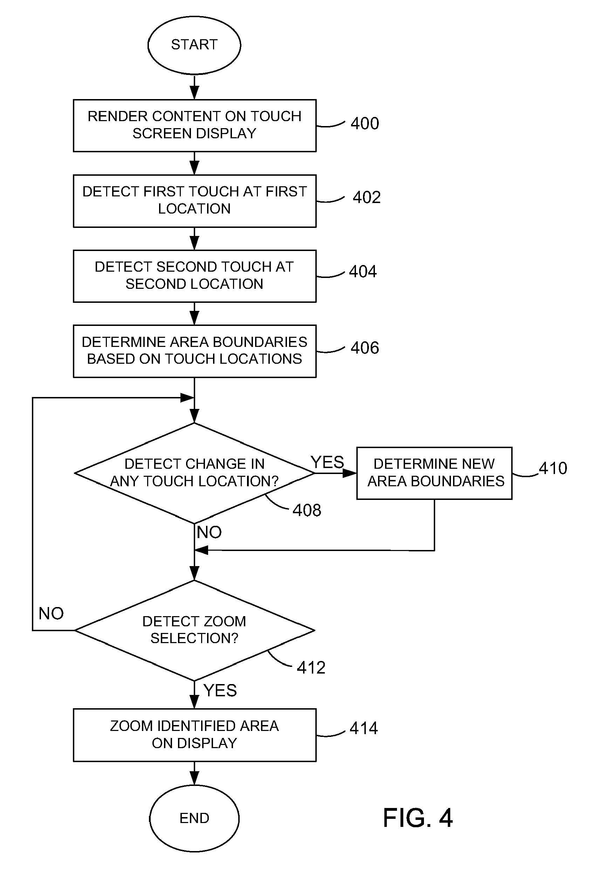

The process shown and described with reference to FIG. 4 is simplified for the purpose of the present explanation and other steps and substeps may be included. Alternatively, some of the steps and substeps may be excluded.

While the embodiments described herein are directed to particular implementations of the portable electronic device and the method of controlling the portable electronic device, it will be understood that modifications and variations may occur to those skilled in the art. All such modifications and variations are believed to be within the sphere and scope of the present disclosure. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. A method of controlling a portable electronic device having a touch-sensitive display, the method comprising:
rendering information on the touch-sensitive display;
detecting a first touch at a first location on the touch-sensitive display;
detecting a second touch at a second location on the touch-sensitive display during the first touch;
determining, based at least in part on the first location and the second location, an area having at least one boundary;
when a zoom selection is detected, performing a zoom by expanding at least some of the information rendered from the area.

2. The method according to claim 1, wherein performing a zoom comprises centering the area on the touch-sensitive display.

3. The method according to claim 1 or claim 2, wherein determining the area comprises determining a rectangular area extrapolated from the first location and the second location.

4. The method according to any preceding claim, wherein the first location and the second location are diagonally opposing corners of a rectangle.

5. The method according to any preceding claim, wherein expanding at least some of the information rendered comprises expanding the information rendered within a rectangle by expanding all boundaries of the area by one factor.

6. The method according to any of claims 1 to 4, wherein expanding at least some of the information rendered comprises expanding the information rendered in the area to fill available display area of the touch-sensitive display.

7. The method of any of claims 1 to 4, wherein performing a zoom comprises expanding more information than the information rendered from the area.

8. The method according to any preceding claim, comprising cropping the information rendered from at least two opposing sides of the rectangle.

9. The method according to any preceding claim, further comprising detecting a change in the first location and using the changed first location in determining the area prior to performing the zoom.

10. The method according to any preceding claim, further comprising detecting a change in the second location and using the changed second location in determining the area prior to performing the zoom.

11. The method according to any preceding claim, wherein the zoom selection comprises an input from a switch actuated by movement of the touch-sensitive display.

12. The method according to any preceding claim, wherein the zoom selection comprises determining that a force imparted on the touch-sensitive display exceeds a threshold force.

13. A computer-readable medium having computer-readable code embodied therein, the computer-readable code executable by a processor of a portable electronic device to perform the method of any preceding claim.

14. A portable electronic device comprising:
a touch-sensitive display;
a processor operably connected to the touch-sensitive display,
a memory device storing computer-readable program code executable by the processor to cause the electronic device to:
render information on the touch-sensitive display,
detect a first touch at a first location and a second touch at a second location on the touch-sensitive display,
determine an area based on the first location and the second location,
when a zoom selection is detected, zoom at least some of the information rendered from the area.

15. A portable electronic device comprising:
a touch-sensitive display;
a processor operably connected to the touch-sensitive display,
a memory device storing computer-readable program code executable by the processor to cause the electronic device to perform the method of any of claims 1 to 12.

## Amended claims

### Amended claims in accordance with Rule 137(2) EPC.

**1.** A method of controlling a portable electronic device (100) having a touch-sensitive display (118), the method comprising:
rendering information on the touch-sensitive display (118);
detecting a first touch at a first location on the touch-sensitive display (118);
detecting a second touch at a second location on the touch-sensitive display (118) during the first touch;
determining, based at least in part on the first location and the second location, an area having at least one boundary;
when a zoom selection is detected, performing a zoom by expanding at least some of the information rendered from the area until the at least one boundary corresponds with a boundary of an available display area of the touch-sensitive display (118).

**2.** The method according to claim 1, wherein performing a zoom comprises centering the area on the touch-sensitive display (118).

**3.** The method according to claim 1 or claim 2, wherein determining the area comprises determining a rectangular area extrapolated from the first location and the second location.

**4.** The method according to any preceding claim, wherein the first location and the second location are diagonally opposing corners of a rectangle.

**5.** The method according to any preceding claim, wherein expanding at least some of the information rendered comprises expanding the information rendered within a rectangle by expanding all boundaries of the area by one factor.

**6.** The method according to any of claims 1 to 4, wherein expanding at least some of the information rendered comprises expanding the information rendered in the area to fill available display area of the touch-sensitive display (118).

**7.** The method of any of claims 1 to 4, wherein performing a zoom comprises expanding more information than the information rendered from the area.

**8.** The method according to any preceding claim, comprising cropping the information rendered from at least two opposing sides of the rectangle.

**9.** The method according to any preceding claim, further comprising detecting a change in the first location and using the changed first location in determining the area prior to performing the zoom.

**10.** The method according to any preceding claim, further comprising detecting a change in the second location and using the changed second location in determining the area prior to performing the zoom.

**11.** The method according to any preceding claim, wherein the zoom selection comprises an input from a switch (120) actuated by movement of the touch-sensitive display (118).

**12.** The method according to any preceding claim, wherein the zoom selection comprises determining that a force imparted on the touch-sensitive display (118) exceeds a threshold force.

**13.** A computer-readable medium having computer-readable code embodied therein, the computer-readable code executable by a processor (102) of a portable electronic device (100) to perform the method of any preceding claim.

**14.** A portable electronic device (100) comprising:
a touch-sensitive display (118);
a processor (102) operably connected to the touch-sensitive display (118),
a memory (108, 110) device storing computer-readable program code executable by the processor (102) to cause the electronic device (100) to:
render information on the touch-sensitive display (118),
detect a first touch at a first location and a second touch at a second location on the touch-sensitive display (118),
determine an area having at least one boundary based on the first location and the second location,
when a zoom selection is detected, zoom at least some of the information rendered from the area until the at least one boundary corresponds with a boundary of an available display area of the touch-sensitive display (118).

**15.** The method according to claim 1, wherein the area has a pair of opposing boundaries (604, 608 or 606, 610) and the information rendered is expanded until the pair of opposing boundaries (604, 608 or 606, 610) are the same distance apart as corresponding boundaries of the available display area of the touch screen display (118).
